# FASCICULE DE BREVET EUROPEEN

(11) **EP 3 358 307 B1**
(45) Date de publication et mention de la délivrance du brevet: **05.05.2021**
(21) Numéro de dépôt: 18153521.2
(22) Date de dépôt: 25.01.2018
(51) Int. Cl.: G01D 4/00, G05B 19/042

(54) **PROCÉDÉ DE GESTION D'UNE ALIMENTATION AUXILIAIRE D'UN COMPTEUR ET COMPTEUR, PROGRAMME ET MOYEN DE STOCKAGE CORRESPONDANTS**
VERFAHREN ZUR VERWALTUNG EINER HILFSSTROMVERSORGUNG EINES ZÄHLERS UND ENTSPRECHENDER ZÄHLER SOWIE PROGRAMM UND SPEICHERMEDIUM
METHOD FOR MANAGING AN AUXILIARY POWER SUPPLY OF A METER AND RESPECTIVE METER, PROGRAM AND STORAGE MEDIUM

(30) Priorité: 03.02.2017 FR 1750934
(43) Date de publication de la demande: 08.08.2018
(73) Titulaire: Sagemcom Energy & Telecom SAS, 92500 Rueil-Malmaison (FR)
(72) Inventeur: GRINCOURT, Christophe, 92500 RUEIL MALMAISON (FR); JEANROT, Marc, 92500 RUEIL MALMAISON (FR)
(74) Mandataire: Lavaud, Thomas

(56) Documents cités:
- EP-A1- 2 395 360
- WO-A1-2010/109139
- WO-A1-2010/136266
- US-A1- 2012 280 830
- US-A1- 2015 325 114

## Description

L'invention concerne le domaine des procédés de gestion d'une alimentation auxiliaire d'un compteur de type compteur d'énergie électrique.

### ARRIERE PLAN DE L'INVENTION

Certains compteurs d'énergie électrique modernes sont susceptibles d'être équipés d'un module TIC (pour Télé-Information Client).

Le module TIC permet de transmettre des informations internes au compteur vers un client ou un système de gestion d'énergie au sein du foyer.

Le module TIC peut par exemple transmettre des informations relatives à la consommation d'énergie électrique mesurée par le compteur ou à un abonnement souscrit par le client.

Un tel module TIC est « optionnellement » connecté au compteur. Par « optionnellement », on entend que le compteur peut fonctionner avec ou sans le module TIC, et que le module TIC peut être connecté au compteur sans qu'il soit nécessaire de modifier le compteur au niveau matériel, logiciel et mécanique.

Le module TIC est alimenté par une alimentation auxiliaire du compteur dédiée à cette utilisation. Tous les nouveaux compteurs susceptibles d'être équipés d'un module TIC comportent cette alimentation auxiliaire. Le compteur et l'alimentation auxiliaire sont eux-mêmes alimentés par le réseau électrique.

On estime aujourd'hui que 80% à 90% des compteurs susceptibles d'accueillir un module TIC ne sont pas équipés d'un module TIC lorsque ces compteurs sont en opération.

Or, lorsqu'elle est activée, l'alimentation auxiliaire présente une certaine consommation d'énergie électrique (qui n'est pas facturée au client), même lorsqu'aucun module TIC n'est connecté au compteur. Le gaspillage d'énergie électrique qui découle de cette situation est bien sûr négligeable pour un seul compteur, mais est relativement important lorsque l'on considère un parc d'un grand nombre de compteurs. Un tel compteur est divulgué dans le document WO2010/109139.

Pour réduire ce gaspillage, il a été envisagé de réduire la consommation propre d'une alimentation auxiliaire en optimisant le choix des composants électriques de l'alimentation auxiliaire. L'optimisation du choix des composants électriques consiste à choisir des composants à faible consommation, à réduire la consommation de courant dans les résistances de *pull-down* et de *pull-up,* à optimiser des composants magnétiques pour réduire les pertes, etc. L'équilibre est cependant complexe à obtenir entre un circuit d'alimentation auxiliaire présentant une consommation réduite à vide et un circuit d'alimentation auxiliaire fournissant une puissance relativement importante lorsqu'un module TIC est connecté au compteur. Le coût de développement d'une alimentation auxiliaire est donc important.

### OBJET DE L'INVENTION

L'invention a pour objet une solution peu coûteuse pour réduire la consommation électrique d'un parc de compteurs comprenant un grand nombre de compteurs de type compteurs d'énergie électrique.

### RESUME DE L'INVENTION

En vue de la réalisation de ce but, on propose un procédé de gestion d'une alimentation auxiliaire intégrée dans un compteur de type compteur d'énergie électrique, l'alimentation auxiliaire étant destinée à alimenter un module de communication optionnellement connecté au compteur, le procédé de gestion comportant les étapes :
- de mesurer, à intervalles réguliers de durée prédéterminée et pendant une période de mesure de durée prédéterminée, un paramètre électrique de l'alimentation auxiliaire ;
- de déterminer, en fonction d'une mesure du paramètre électrique, si le module de communication est connecté ou non au compteur ;
- si le module de communication est connecté au compteur, de mettre l'alimentation auxiliaire dans un mode de fonctionnement nominal ;
- sinon, de mettre l'alimentation auxiliaire dans un mode de fonctionnement à basse consommation jusqu'à une prochaine période de mesure.

En mettant l'alimentation auxiliaire dans un mode de fonctionnement à basse consommation entre deux périodes de mesure lorsque le module de communication n'est pas connecté au compteur, on limite fortement l'énergie électrique consommée inutilement par l'alimentation auxiliaire. Dans le cas d'un parc de compteurs comprenant un grand nombre de compteurs, la réduction de la consommation électrique résultant de la mise en œuvre du procédé de gestion d'une alimentation auxiliaire selon l'invention est très importante et très avantageuse pour le fournisseur d'énergie électrique.

On estime que la réduction de consommation électrique obtenue grâce au procédé de gestion d'une alimentation auxiliaire selon l'invention est d'environ 60mW pour un compteur, c'est à dire d'un peu plus de 6% de la consommation du compteur (hors communication). Le parc de compteurs actuel en France comprenant environ 35 millions de compteurs, le procédé de gestion d'une alimentation auxiliaire selon l'invention pourrait permettre d'économiser jusqu'à 2,1MW.

On note par ailleurs qu'il est possible, pour mesurer le paramètre électrique de l'alimentation auxiliaire, d'utiliser des capteurs préexistants. La mise en œuvre du procédé de gestion d'une alimentation auxiliaire selon l'invention présente donc un coût réduit, puisqu'elle ne nécessite pas de modification matérielle du compteur.

On propose de plus un compteur de type compteur d'énergie électrique comportant une alimentation auxiliaire, des bornes de connexion pour connecter un module de communication au compteur, et des moyens de traitement agencés pour mettre en œuvre le procédé de gestion décrit plus tôt.

On propose aussi un programme d'ordinateur comprenant des instructions pour mettre en œuvre, par un compteur de type compteur d'énergie électrique, le procédé de gestion décrit plus tôt.

On propose en outre des moyens de stockage qui stockent un programme d'ordinateur comprenant des instructions pour mettre en œuvre, par un compteur de type compteur d'énergie électrique, le procédé de gestion décrit plus tôt.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 représente un compteur d'énergie électrique dans lequel est mis en œuvre le procédé de gestion d'une alimentation auxiliaire selon l'invention ;
- la figure 2 illustre le procédé de gestion d'une alimentation auxiliaire selon l'invention à un moment où un module TIC est connecté à un compteur ;
- la figure 3 illustre le procédé de gestion d'une alimentation auxiliaire selon l'invention à un moment où le module TIC est déconnecté du compteur.

### DESCRIPTION DETAILLEE DE L'INVENTION

Le procédé de gestion d'une alimentation auxiliaire selon l'invention est ici mis en œuvre sur un compteur d'énergie électrique.

Le compteur d'énergie électrique est destiné à mesurer une énergie électrique consommée par une installation électrique d'un client et provenant d'un réseau électrique.

Le compteur peut accueillir un module de communication externe, ici un module TIC, qui est optionnellement connecté au compteur.

Le compteur comporte ainsi un espace d'accueil et des moyens de fixation pour accueillir le module TIC et pour fixer le module TIC lorsqu'il est positionné sur le compteur.

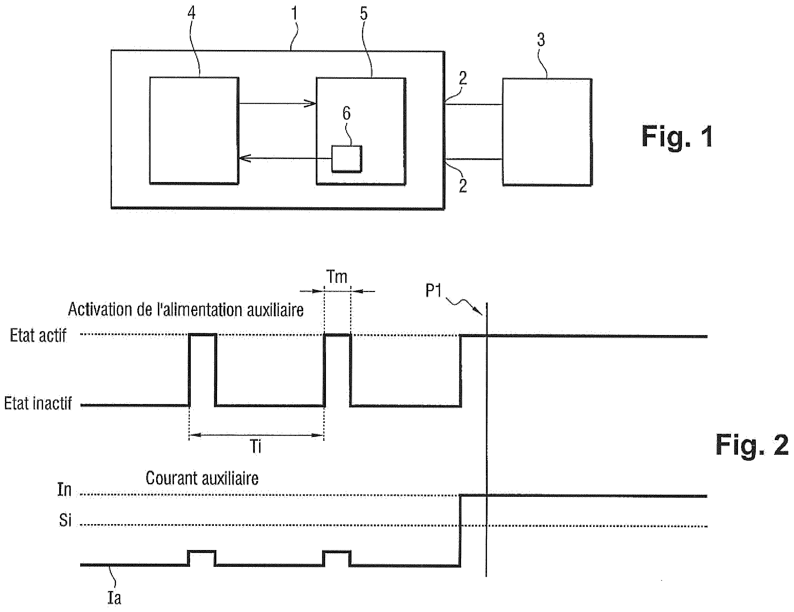

En référence à la figure 1, le compteur 1 comporte en outre des bornes de connexion 2 comprenant des bornes d'alimentation et des bornes de signal auxquelles sont connectés des moyens de connexion du module TIC 3 lorsque celui-ci est monté sur le compteur 1.

Le compteur 1 transmet ainsi au module TIC 3, via les bornes d'alimentation, une tension d'alimentation et un courant d'alimentation qui permettent d'alimenter le module TIC 3. La tension d'alimentation et le courant d'alimentation sont ici des signaux alternatifs à la fréquence de 50kHz. Bien sûr, cette alimentation pourrait parfaitement être une alimentation continue, ou une alimentation alternative à une fréquence différente.

Le compteur 1 transmet aussi au module TIC 3, via les bornes de signal, des informations, par exemple des informations relatives à une consommation électrique de l'installation électrique ou à un abonnement souscrit par le client. Le module TIC 3 peut ainsi transmettre ces informations au client ou à un système de gestion d'énergie au sein du foyer.

Le compteur 1 comporte de plus des moyens de traitement 4, une alimentation auxiliaire 5 et un capteur de courant 6 (dont le rôle sera évoqué plus tard). Bien sûr, le compteur 1 comporte de nombreux autres éléments qui ne sont pas détaillés ici (et, en particulier, des moyens de mesure de l'énergie électrique fournie à l'installation électrique par le réseau électrique).

Les moyens de traitement 4 comportent un composant de traitement intelligent (par exemple un processeur, un microcontrôleur ou un FPGA) adapté à exécuter des instructions d'un programme pour mettre en œuvre les différentes étapes du procédé de gestion d'une alimentation auxiliaire selon l'invention. Le composant de traitement intelligent remplit d'autres fonctions, et est notamment adapté à commander l'alimentation auxiliaire 5, à acquérir les mesures produites par le capteur, et à traiter ces mesures.

L'alimentation auxiliaire 5 est destinée à produire la tension d'alimentation et le courant d'alimentation évoqués plus tôt pour alimenter le module TIC 3.

Le capteur de courant 6 est quant à lui adapté à mesurer un courant auxiliaire qui constitue une image d'un courant consommé par l'alimentation auxiliaire 5. Le capteur de courant 6 est ici une résistance, mais tout type de capteur de courant pourrait être utilisé, tel qu'un shunt par exemple.

On note ici que le courant auxiliaire peut parfaitement être un courant mesuré en entrée de l'alimentation auxiliaire 5, en sortie de l'alimentation auxiliaire 5, ou au niveau d'un étage intermédiaire de l'alimentation auxiliaire 5.

On décrit maintenant les étapes du procédé de gestion d'une alimentation auxiliaire selon l'invention.

Le procédé de gestion consiste, à intervalles réguliers de durée prédéterminée, à mesurer pendant une période de mesure de durée prédéterminée un paramètre électrique de l'alimentation auxiliaire 5.

Le paramètre électrique de l'alimentation auxiliaire 5 est ici le courant auxiliaire image du courant consommé par l'alimentation auxiliaire 5.

Au cours de chaque période de mesure, les moyens de traitement 4 activent l'alimentation auxiliaire 5 qui se trouve alors dans un mode de fonctionnement nominal. Le mode de fonctionnement nominal de l'alimentation auxiliaire 5 correspond à un mode actif de l'alimentation auxiliaire 5, dans lequel celle-ci est adaptée à alimenter normalement le module TIC 3 pour que celui-ci puisse fonctionner de manière nominale.

La durée prédéterminée de chaque intervalle régulier est typiquement comprise entre 300ms et 500ms, et est ici égale à 400ms.

La durée prédéterminée de chaque période de mesure est typiquement comprise entre 30ms et 50ms, et est ici égale à 40ms.

Au cours de chaque période de mesure, le capteur de courant 6 mesure le courant auxiliaire et les moyens de traitement 4 acquièrent les mesures réalisées.

Le procédé de gestion consiste ensuite, au cours d'une période de mesure donnée, à déterminer en fonction d'une mesure du courant auxiliaire si le module TIC 3 est connecté ou non au compteur 1.

Le courant auxiliaire est ici typiquement égal à 16mA lorsque le module TIC 3 est connecté au compteur 1. Cette valeur de courant auxiliaire correspond à une consommation nominale du module TIC 3 de 130mW.

Le courant auxiliaire est ici typiquement égal à 2mA lorsque le module TIC 3 n'est pas connecté au compteur 1.

On définit un seuil de courant prédéterminé égal à 5mA.

Les moyens de traitement 4 déterminent que le module TIC 3 est connecté au compteur 1 lorsque le courant auxiliaire est supérieur au seuil de courant prédéterminé. Les moyens de traitement 4 déterminent que le module TIC 3 n'est pas connecté au compteur 1 lorsque le courant auxiliaire est inférieur ou égal au seuil de courant prédéterminé.

Lorsque le module TIC 3 est connecté au compteur 1, le courant consommé par l'alimentation auxiliaire 5, dont le courant auxiliaire est une image, est égal à la somme du courant d'alimentation consommé par le module TIC 3 et du courant correspondant à la consommation propre de l'alimentation auxiliaire 5.

Lorsque le module TIC 3 n'est pas connecté au compteur 1, le courant consommé par l'alimentation auxiliaire 5, dont le courant auxiliaire est une image, est égal au courant correspondant à la consommation propre de l'alimentation auxiliaire 5.

Lorsque les moyens de traitement 4 déterminent que le module TIC 3 n'est pas connecté au compteur 1, les moyens de traitement 4 mettent l'alimentation auxiliaire 5 dans un mode de fonctionnement à basse consommation.

Le mode de fonctionnement à basse consommation correspond à une désactivation de l'alimentation auxiliaire 5. La consommation propre de l'alimentation auxiliaire 5 est alors nulle.

L'alimentation auxiliaire 5 reste désactivée jusqu'à la prochaine période de mesure.

Lorsque les moyens de traitement 4 déterminent que le module TIC 3 est connecté au compteur 1, les moyens de traitement maintiennent l'alimentation auxiliaire 5 dans le mode de fonctionnement nominal.

Les moyens de traitement 4 vérifient alors, au cours de chaque période de mesure qui suit, que le module TIC 3 demeure connecté au compteur 1.

Ainsi, au cours de chaque période de mesure, les moyens de traitement 4 acquièrent des mesures du courant auxiliaire et vérifient que celui-ci demeure supérieur au seuil de courant prédéterminé.

Si c'est le cas, les moyens de traitement 4 maintiennent l'alimentation auxiliaire 5 dans le mode de fonctionnement nominal.

Si le courant auxiliaire devient inférieur ou égal au seuil de courant prédéterminé, cela signifie que le module TIC 3 n'est plus connecté au compteur 1.

Pour éviter de prendre en compte des mesures de courant auxiliaire erronées, les moyens de traitement 4 acquièrent plusieurs mesures du courant auxiliaire au cours de plusieurs périodes de mesure successives pour confirmer que le module TIC 3 est bien déconnecté du compteur 1.

Les moyens de traitement 4 confirment ici que le module TIC 3 est bien déconnecté du compteur 1 après avoir mesuré au cours de 2 périodes de mesure successives que le courant auxiliaire est inférieur ou égal au seuil de courant prédéterminé.

Les moyens de traitement 4 activent donc l'alimentation auxiliaire 5 pendant une durée suffisamment courte (ici égale à 40ms) pour que la consommation électrique reste faible, et suffisamment longue pour pouvoir détecter la présence du module TIC 3. Répéter ces mesures fréquemment (ici, toutes les 400ms) permet d'assurer une bonne réactivité de détection du module TIC 3 lorsque celui-ci vient d'être connecté.

L'alimentation auxiliaire 5 est ainsi alimentée pendant 40ms toutes les 400ms, ce qui permet de réduire de 90% environ les pertes en énergie électrique dues au fonctionnement de l'alimentation auxiliaire 5 lorsque le module TIC 3 n'est pas connecté.

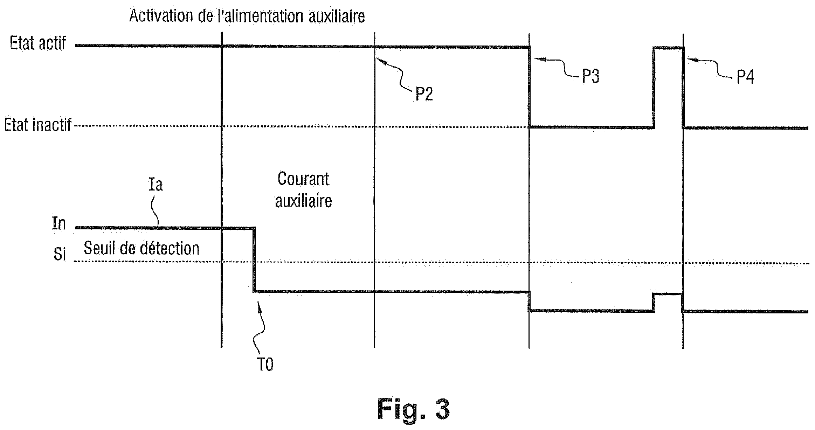

Les figures 2 et 3 illustrent ce qui vient d'être dit.

En référence à la figure 2, lorsque le module TIC 3 n'est pas connecté au compteur 1, les moyens de traitement 4 activent l'alimentation auxiliaire 5 (état actif) pendant une période de mesure de durée prédéterminée Tm égale à 40ms et ce, à intervalles réguliers de durée prédéterminée Ti égale à 400ms. Tant que le courant auxiliaire la demeure inférieur ou égal au seuil de courant prédéterminé Si, la présence du module TIC 3 n'est pas détectée, et, entre deux périodes de mesure, l'alimentation auxiliaire 5 demeure désactivée (état inactif).

Lorsqu'au cours d'une période de mesure P1 le courant auxiliaire Ia est supérieur au seuil de courant prédéterminé Si, les moyens de traitement 4 détectent que le module TIC 3 est connecté au compteur 1 et maintiennent l'alimentation auxiliaire 5 activée dans le mode de fonctionnement nominal. Le courant auxiliaire Ia a une valeur de courant nominale In qui correspond à la somme du courant d'alimentation consommé par le module TIC 3 et du courant correspondant à la consommation propre de l'alimentation auxiliaire 5.

En référence à la figure 3, lorsque le module TIC 3 est connecté au compteur 1, le courant auxiliaire la mesuré est supérieur au seuil de courant prédéterminé Si.

Le module TIC 3 est alors déconnecté du compteur 1 à un certain moment T0.

Le courant auxiliaire la mesuré est inférieur au seuil de courant prédéterminé Si au cours d'une période de mesure P2. La déconnexion du module TIC 3 n'est pas encore confirmée, et l'alimentation auxiliaire 5 est maintenue active. Le courant auxiliaire la mesuré est inférieur au seuil de courant prédéterminé Si au cours d'un période de mesure P3 qui suit la période de mesure P2. La déconnexion du module TIC 3 est alors confirmée et l'alimentation auxiliaire 5 est désactivée.

L'alimentation auxiliaire 5 demeure désactivée jusqu'à la prochaine période de mesure P4. Au cours de cette prochaine période de mesure P4, le courant auxiliaire Ia mesuré est inférieur au seuil de courant prédéterminé Si, et l'alimentation auxiliaire 5 demeure désactivée.

Bien entendu, l'invention n'est pas limitée au mode de réalisation décrit mais englobe toute variante entrant dans le champ de l'invention telle que définie par les revendications.

On a ici mis en œuvre l'invention dans un compteur d'énergie électrique. L'invention s'applique cependant bien sûr à tout type de compteur, et notamment à un compteur d'eau ou à un compteur de gaz.

Le module de communication évoqué ici est un module TIC, mais il peut s'agir de tout type de module de communication agencé pour transmettre ou recevoir tout type de donnée par tout type de moyen de communication (filaire, sans fil, par courant porteur, etc.).

La durée prédéterminée des intervalles réguliers et la durée prédéterminée des périodes de mesure pourraient bien sûr être différentes des durées évoquées. Il serait par ailleurs possible de faire varier ces durées en opération, par exemple pour optimiser la réduction de la consommation électrique de l'alimentation auxiliaire.

Bien que le paramètre électrique mesuré ici soit le courant auxiliaire, il est possible d'utiliser un autre paramètre électrique, et notamment une tension en entrée, en sortie ou au niveau d'un étage intermédiaire de l'alimentation auxiliaire.

De même, le mode de fonctionnement à basse consommation n'est pas nécessairement un mode dans lequel l'alimentation auxiliaire est désactivée, mais pourrait être un mode différent, par exemple un mode où l'alimentation fournie à l'alimentation auxiliaire est réduite.

## Revendications

1. Procédé de gestion d'une alimentation auxiliaire (5) intégrée dans un compteur (1) de type compteur d'énergie électrique, l'alimentation auxiliaire (5) étant destinée à alimenter un module de communication (3) optionnellement connecté au compteur (1), le procédé de gestion comportant les étapes :
- de mesurer, à intervalles réguliers de durée prédéterminée et pendant une période de mesure de durée prédéterminée, un paramètre électrique (la) de l'alimentation auxiliaire (5) ;
- de déterminer, en fonction d'une mesure du paramètre électrique, si le module de communication (3) est connecté ou non au compteur (1) ;
- si le module de communication est connecté au compteur, de mettre l'alimentation auxiliaire dans un mode de fonctionnement nominal ;
- sinon, de mettre l'alimentation auxiliaire dans un mode de fonctionnement à basse consommation jusqu'à une prochaine période de mesure.

2. Procédé de gestion selon la revendication 1, dans lequel, au cours de chaque période de mesure, l'alimentation auxiliaire (5) est mise dans le mode de fonctionnement nominal et dans lequel le mode de fonctionnement à basse consommation est un mode de désactivation de l'alimentation auxiliaire (5).

3. Procédé de gestion selon la revendication 2, dans lequel le paramètre électrique est un courant image d'un courant consommé par l'alimentation auxiliaire (5), et dans lequel on détermine que le module de communication (3) est connecté au compteur (1) lorsque le courant image est supérieur à un seuil de courant prédéterminé.

4. Procédé de gestion selon la revendication 1, dans lequel la durée prédéterminée d'un intervalle est comprise entre 300ms et 500ms, et dans lequel la durée prédéterminée d'une période de mesure est comprise entre 30ms et 50ms.

5. Procédé de gestion selon la revendication 1, dans lequel le compteur est un compteur d'énergie électrique et dans lequel le module de communication (3) est un module de télé-information destiné notamment à transmettre à un fournisseur d'énergie électrique ou à un gestionnaire de réseau ou à un client des données relatives à une consommation d'énergie électrique mesurée par le compteur (1).

6. Compteur de type compteur d'énergie électrique comportant une alimentation auxiliaire (5), des bornes de connexion (2) pour connecter un module de communication (3) au compteur (1), et des moyens de traitement (4) agencés pour mettre en œuvre le procédé de gestion selon l'une des revendications 1 à 5.

7. Programme d'ordinateur comprenant des instructions qui, lorsque le programme est exécuté par un compteur de type compteur d'énergie électrique, conduisent celui-ci à mettre en œuvre le procédé de gestion selon l'une des revendications 1 à 5.

8. Moyen de stockage sur lequel est enregistré un programme d'ordinateur comprenant des instructions qui, lorsqu'elles sont exécutées par un compteur de type compteur d'énergie électrique, conduisent celui-ci à mettre en œuvre le procédé de gestion selon l'une des revendications 1 à 5.

## Patentansprüche

1. Verwaltungsverfahren zum Verwalten einer Hilfsstromversorgung (5), die in einen Zähler (1) vom Typ Stromzähler integriert ist, wobei die Hilfsstromversorgung (5) dazu bestimmt ist, ein Kommunikationsmodul (3) zu versorgen, das wahlweise an den Zähler (1) angeschlossen ist, wobei das Verwaltungsverfahren die Schritte umfasst:
- Messen eines elektrischen Parameters (la) der Hilfsstromversorgung (5) in regelmäßigen Abständen vorbestimmter Dauer und während einer Messperiode vorbestimmter Dauer;
- Bestimmen in Abhängigkeit von einer Messung des elektrischen Parameters, ob das Kommunikationsmodul (3) an den Zähler (1) angeschlossen ist oder nicht;
- wenn das Kommunikationsmodul an den Zähler angeschlossen ist, Versetzen der Hilfsstromversorgung in einen nominalen Betriebsmodus;
- andernfalls Versetzen der Hilfsversorgung in einen Betriebsmodus mit niedrigem Verbrauch bis zu einer nächsten Messperiode.

2. Verwaltungsverfahren nach Anspruch 1, bei dem während jeder Messperiode die Hilfsstromversorgung (5) in den nominalen Betriebsmodus versetzt wird und bei dem der Betriebsmodus mit niedrigem Verbrauch ein Deaktivierungsmodus der Hilfsstromversorgung (5) ist.

3. Verwaltungsverfahren nach Anspruch 2, bei dem der elektrische Parameter ein Bildstrom eines Stroms ist, der von der Hilfsstromversorgung (5) verbraucht wird, und bei dem man bestimmt, dass das Kommunikationsmodul (3) an den Zähler (1) angeschlossen ist, wenn der Bildstrom größer als ein vorbestimmter Schwellenwert ist.

4. Verwaltungsverfahren nach Anspruch 1, bei dem die vorbestimmte Dauer eines Intervalls zwischen 300ms und 500ms beträgt und bei dem die vorbestimmte Dauer einer Messperiode zwischen 30ms und 50ms beträgt.

5. Verwaltungsverfahren nach Anspruch 1, bei dem der Zähler ein Stromzähler ist und bei dem das Kommunikationsmodul (3) ein Teleinformationsmodul ist, das insbesondere dazu bestimmt ist, einem Stromlieferanten oder einem Netzverwalter oder einem Kunden Daten bezüglich eines von dem Zähler (1) gemessenen Stromverbrauchs zu übermitteln.

6. Zähler vom Typ Stromzähler, umfassend eine Hilfsstromversorgung (5), Anschlussklemmen (2) zum Anschließen eines Kommunikationsmoduls (3) an den Zähler (1) und Verarbeitungsmittel (4), die ausgebildet sind, um das Verwaltungsverfahren nach einem der Ansprüche 1 bis 5 durchzuführen.

7. Rechnerprogramm, umfassend Anweisungen, die, wenn das Programm von einem Zähler vom Typ Stromzähler ausgeführt wird, diesen veranlassen, das Verwaltungsverfahren nach einem der Ansprüche 1 bis 5 durchzuführen.

8. Speichermittel, auf denen ein Rechnerprogramm gespeichert ist, das Anweisungen umfasst, die, wenn sie von einem Zähler vom Typ Stromzähler ausgeführt werden, diesen veranlassen, das Verwaltungsverfahren nach einem der Ansprüche 1 bis 5 durchzuführen.

## Claims

1. A management method for managing an auxiliary power supply (5) incorporated in a meter (1) of the electrical energy meter type, the auxiliary power supply (5) being for powering a communication module (3) optionally connected to the meter (1), the management method comprising the steps of:
• measuring an electrical parameter (Ia) of the auxiliary power supply (5) at regular intervals of predetermined duration and during a measurement period of predetermined duration;
• as a function of a measurement of the electrical parameter, determining whether the communication module (3) is or is not connected to the meter (1); and
• if the communication module is connected to the meter, putting the auxiliary power supply into a nominal mode of operation;
• or else putting the auxiliary power supply into a low-consumption mode of operation until the next measurement period.

2. A management method according to claim 1, wherein, during each measurement period, the auxiliary power supply (5) is put into the nominal mode of operation, and wherein the low-consumption mode of operation is a deactivation mode of the auxiliary power supply (5).

3. A management method according to claim 2, wherein the electrical parameter is an image current that is the image of current being consumed by the auxiliary power supply (5), and wherein it is determined that the communication module (3) is connected to the meter (1) when the image current is greater than a predetermined current threshold.

4. A management method according to claim 1, wherein the predetermined duration of an interval lies in the range 300 ms to 500 ms, and wherein the predetermined duration of a measurement period lies in the range 30 ms to 50 ms.

5. A management method according to claim 1, wherein the meter is an electrical energy meter, and wherein the communication module (3) is a remote information module in particular for the purpose of transmitting data relating to electrical energy consumption measured by the meter (1) to a supplier of electrical energy or to a network manager or to a customer.

6. A meter of the electrical energy meter type including an auxiliary power supply (5), connection terminals (2) for connecting a communication module (3) to the meter (1), and processor means (4) arranged to perform the management method according to any one of claims 1 to 5.

7. A computer program including instructions that, when the program is executed by a meter of the electrical energy meter type, cause the meter to perform the management method according to any one of claims 1 to 5.

8. Storage means storing a computer program including instructions that, when they are executed by a meter of the electrical energy meter type, cause the meter to perform the management method according to any one of claims 1 to 5.
